(19) Europäisches Patentamt
European Patent Office
Office européen des brevets

(11) **EP 4 650 643 A1**

(12) **EUROPEAN PATENT APPLICATION**
published in accordance with Art. 153(4) EPC

(43) Date of publication:
**19.11.2025  Bulletin 2025/47**

(21) Application number: **24817460.9**

(22) Date of filing: **09.04.2024**

(51) International Patent Classification (IPC):
**F16L 55/32** (2006.01)    **F16L 55/40** (2006.01)
**B25J 5/00** (2006.01)    **B25J 11/00** (2006.01)
**H02P 7/06** (2006.01)    **H02P 3/14** (2006.01)

(52) Cooperative Patent Classification (CPC):
**B25J 5/00; B25J 11/00; F16L 55/32; F16L 55/40;
H02P 3/14; H02P 7/06**

(86) International application number:
**PCT/KR2024/004762**

(87) International publication number:
**WO 2025/198079 (25.09.2025 Gazette 2025/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.03.2024  KR 20240039307**

(71) Applicant: **Korea Gas Corporation
Daegu 41062 (KR)**

(72) Inventors:
• **KIM, Jae Jun
  Incheon 21993 (KR)**

• **KIM, Dae Kwang
  Incheon 21993 (KR)**
• **YOO, Kwang Hyun
  Incheon 21993 (KR)**
• **KIM, Dong Kyu
  Incheon 21993 (KR)**
• **YANG, Seung Ung
  Incheon 21993 (KR)**
• **YOO, Hui Ryoung
  Incheon 21993 (KR)**
• **SONG, Hong Seok
  Incheon 21993 (KR)**

(74) Representative: **BCKIP Part mbB
MK1
Landsbergerstraße 98, 3.Stock
80339 München (DE)**

(54) **PIPE-TRAVELING DEVICE AND OPERATION METHOD THEREOF**

(57)    A method of operating a pipe moving device according to an embodiment of the present disclosure is provided. The method includes acquiring a moving speed of a body part, determining whether braking of the body part is required based on the speed, and setting an output state of a motor that rotates in conjunction with a guide wheel of the body part according to a result of the determination, wherein the output state includes one of a load state in which a load is electrically connected to the motor and a no-load state in which the load is electrically separated from the motor.

[FIG. 1]

100

START

ACQUIRE DRIVING INFORMATION — S110

DETERMINE WHETHER BRAKING IS REQUIRED — S120

SET OUTPUT STATE OF MOTOR — S130

END

EP 4 650 643 A1

## Description

[Technical Field]

The present invention relates to a pipe moving device and a method of operating the same.

[Background Art]

A pipe moving device, which is a device used for in-line inspection (ILI), measures and analyzes geometric deformation and loss of a pipe while being driven by a gas supply pressure inside the pipe.

When the pipe moving device enters a curved pipe or a straight pipe having a large step while being moved by the gas supply pressure, the pipe moving device may be temporarily stopped due to a high frictional resistance with a surface of the pipe. In this case, when the pipe moving device starts moving again due to a larger differential pressure and proceeds to a section having a low frictional resistance, speed excursion occurs. This is especially common in a low pressure section, which may increase the risk of accidents and may cause problems in collecting pipe data.

In particular, the pipe moving device (e.g., a geometry PIG or the like) equipped with a sensor such as a caliper has higher measurement quality as a moving speed is lower. This is because the time it takes the caliper returns to an initial state when the caliper crosses a welded portion or a step should be considered. Further, in the case of the pipe moving device (e.g., a magnetic flux leakage (MFL) PIG), which measures magnetic flux leakage of a permanent magnet, maintaining a driving speed below 4 m/s is important to ensure the measurement quality.

[Detailed description of the Invention]

[Technical Problem]

The present invention is directed to providing a pipe moving device and a method of operating the same.

[Technical Solution]

A method of operating a pipe moving device according to an embodiment of the present invention is provided. The method comprises acquiring a moving speed, determining whether braking is required based on the moving speed, and setting an output state of a motor that rotates in conjunction with a guide wheel according to a result of the determination, wherein the output state comprises one of a load state in which a load is electrically connected to the motor and a no-load state in which the load is electrically separated from the motor.

Further, when the braking is required, the output state of the motor may be set to the load state to perform regenerative braking.

Further, when the braking is not required, the output state of the motor may be set to the no-load state.

Further, the load may comprise at least one of a battery and a power consumption resistor.

Further, the method may further comprise calculating a required braking force for changing the moving speed to a reference speed when the braking is required, and setting a braking condition based on the required braking force.

Further, the required braking force may be determined by performing proportional-integral-differential (PID) control to input a differential value of a difference between the moving speed and the reference speed.

Further, the braking condition may comprise at least one of the number of motors, a duty cycle, a gear ratio, and a rotational speed of the motor, which are required to generate the required braking force.

Further, the braking condition may be determined by Equation 1.

[Equation 1]

$$F_{rb} = \left( \frac{T_m \times G_m}{r_w} \times \frac{v_m}{v_{rated}} \times N_m \right) \times D_{cycle}$$

In Equation 1, $F_{rb}$ represents the required braking force, $T_m$ represents a maximum torque of the motor, $G_m$ represents a gear ratio between the motor and the guide wheel, $r_w$ is a radius of the guide wheel, $V_m$ is a rotational speed of the motor, $V_{rated}$ represents a rated speed of the motor, $N_m$ represents the number of motors used for the braking, and $D_{cycle}$ represents a duty cycle of the motor.

Further, the method may further comprise calculating an expected power generation amount during the braking and determining whether to charge the battery based on the expected power generation amount and a charging amount of the battery.

Further, an output of the motor may be connected to the power consumption resistor, and thus power generated by the motor may be discharged.

A computer program according to an embodiment of the present invention is provided. The computer program may be stored in a recording medium to execute the method according to the embodiment of the present invention.

A device for moving a pipe according to an embodiment of the present invention is provided. The device comprises a body part that drives inside a pipe due to a pressure difference of fluid between a front end and a rear end thereof, at least one guide wheel that is provided in the body part and comes into contact with the pipe, a motor that rotates in conjunction with the guide wheel, a switching circuit that sets an output state of the motor to one of a load state in which a load is electrically connected to the motor and a no-load state in which the load is electrically separated from the motor, and a processor that acquires a moving speed, determines whether braking is required based on the moving speed, and sets the output state of the motor according to a result of the determination.

Further, the device may further comprise at least one of a battery and a power consumption resistor selectively connected to the motor by the switching circuit.

Further, the device may further comprise a driving information measuring part that acquires driving information.

[Advantageous Effects]

According to embodiments of the present invention, a driving speed of a pipe moving device can be made constant or maintained at a predetermined speed or less according to a purpose, an inspection method, a surrounding environment, and the like.

Further, according to embodiments of the present invention, the driving speed of the pipe moving device can be controlled without controlling a differential pressure in a pipe.

Further, according to embodiments of the present invention, the driving speed can be controlled while actively responding to an internal condition of the pipe, especially a frictional resistance that changes due to wear of the pipe moving device (especially a driving cup or the like) or the like.

Further, according to embodiments of the present invention, a motor can rotate in conjunction with a guide wheel, and when deceleration of a body part is required, an output state of the motor can be changed to a load state, and thus a braking force can be generated.

Further, according to embodiments of the present invention, the braking force can be generated by adjusting an electric circuit at an output terminal of the motor in a state in which a mechanical connection between the guide wheel and the motor is excluded or minimized.

Further, according to embodiments of the present invention, by adjusting the number of motors participating in regenerative braking, a duty cycle, and the like, the braking force can be easily adjusted to enable smooth and safe driving of the pipe moving device.

Further, according to embodiments of the present invention, the regenerative braking can be performed for speed control, a battery of the pipe moving device can be charged with power generated during a braking process, and thus this is eco-friendly, and a driving distance of the pipe moving device can be increased.

Effects obtained from the embodiment of the present invention are not limited to the above-described effects, and other effects that have not been described will be clearly understood by those skilled in the art to which the present invention pertains from the following description.

[Description of Drawings]

A brief description of each drawing is provided so that the drawings cited in the present invention can be better understood.

FIG. 1 is a flowchart of a method of operating a pipe moving device according to an embodiment of the present invention.
FIG. 2 is a flowchart of a method of operating a pipe moving device according to an embodiment of the present invention.
FIG. 3 is a flowchart of a method of operating a pipe moving device according to an embodiment of the present invention.
FIG. 4 is a block diagram of a pipe moving device according to an embodiment of the present invention.
FIG. 5 is a view for describing a method of operating a pipe moving device according to an embodiment of the present invention.
FIG. 6 is a view for describing a method of operating a pipe moving device according to an embodiment of the present invention.
FIG. 7 is a view for describing a method of operating a pipe moving device according to an embodiment of the present invention.

[Modes of the Invention]

The technical spirit of the present invention may be modified in various ways and may have various embodiments, and thus specific embodiments will be illustrated in the accompanying drawings and described in detail. However, this is not intended to limit the technical spirit of the present invention to a specific embodiment and the present invention should be understood to include all changes, equivalents, or substitutes included in the scope of this technical spirit of the present invention.

In describing the technical spirit of the present invention, when it is determined that detailed description of related widely known technology may unnecessarily obscure the subject matter of the present invention, the detailed description thereof will be omitted.

Terms used in the specification are used to describe embodiments and are not intended to restrain and/or limit the present invention. Singular expressions include plural expressions unless clearly otherwise indicated in the context. Further, numbers (e.g., first, second, or the like) used in describing the present invention are merely identification symbols for distinguishing a first component from a second component.

In the specification, when a first part is connected to a second part, this includes not only a case in which the first part is directly connected to the second part but also a case in which the first part is indirectly connected to the second part with a third part interposed therebetween. Further, when a first part includes a second part, this means that a third part is not excluded but may be further included unless otherwise specifically stated.

Further, in the present invention, the term "or" is intended to mean not an exclusive "or" but an inclusive "or." That is, a state in which "X uses A or B" is intended to mean one of natural inclusive substitutions when not otherwise specified or unclear in the context. That is, "X uses A or B" may apply to any of the cases when X uses A; when X uses B; or when X uses both A and B. Further, the term "and/or" used herein should be understood to refer to and include all possible combinations of one or more of the listed related components.

Further, the terms "unit," "device," "part," and "module" described in herein may mean units that process at least one function or operation and may be implemented by hardware or software or a combination of hardware and software.

Further, it is clarified that distinguishment of the components in the present invention is merely distinguishment based on main functions that the components are in charge of. That is, two or more components described below may be combined into one component or one component may be divided into two or more components according to more detailed functions. Further, each of the components described below may additionally perform some or all functions that other components are in charge of in addition to a main function that the component is in charge of, and some of the main functions that the components are in charge of may be assigned to and performed by other components.

Hereinafter, embodiments of the present invention will be sequentially described in detail.

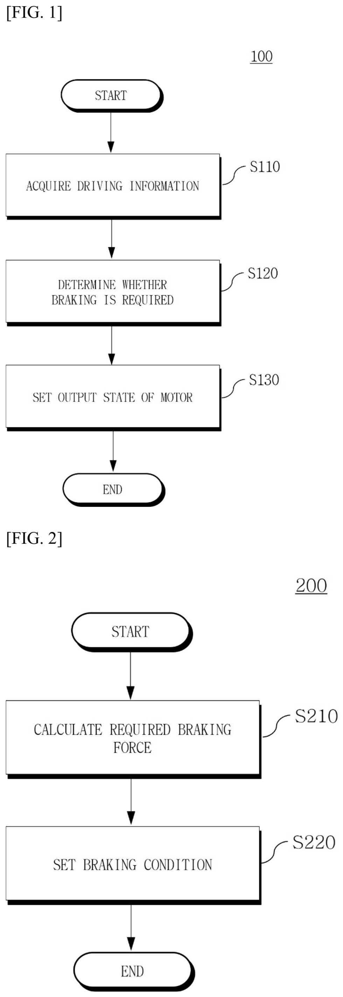

FIG. 1 is a flowchart of a method of operating a pipe moving device according to an embodiment of the present invention.

In operation S110, driving information of the pipe moving device may be acquired. Here, the driving information may include at least one of a moving speed, a moving acceleration, and position information of the pipe moving device.

For example, in operation S110, the moving speed of the pipe moving device may be acquired from at least one mileage meter (e.g., an odometer or the like). For example, in operation S110, the moving acceleration may be acquired from an accelerometer (e.g., an IMU accelerometer or the like). For example, in operation S110, a moving speed corrected using an extended Kalman filter may be acquired from the moving speed and the moving acceleration. Further, for example, in operation S110, a speed, an acceleration, and a movement distance may be calculated from a speed, an acceleration, and a movement distance that are primarily acquired (e.g., by differentiation or integration). Further, for example, in operation S110, the position information may be acquired (e.g., by integration) from the speed, the acceleration, and the movement distance. However, the present invention is not limited thereto.

In operation S120, it may be determined whether braking is required based on the driving information. For example, when the speed of the pipe moving device is greater than a reference speed, it may be determined that braking is required for deceleration. For example, when the acceleration of the pipe moving device is greater than or smaller than a reference acceleration, it may be determined that braking is required. For example, when the pipe moving device is positioned in a preset dangerous section inside the pipe, it may be determined that braking is required. Here, the dangerous section may be a section in which a sudden change in speed is expected, such as an inlet of a curved pipe or a descending pipe. However, the present invention is not limited thereto.

According to a determination result in operation S120, an output state of a motor may be set in operation S130. Here, the output state of the motor may be one of a load state and a no-load state. When it is determined that braking is required, in operation S130, the output of the motor may be set to the load state. Unlike this, when it is determined that braking is not required, in operation S130, the output of the motor may be set to the no-load state.

In detail, the motor (in particular, a brushless direct current (BLDC) motor) may rotate in conjunction with a guide wheel of the pipe moving device. Thus, when the guide wheel rotates, the motor also rotates, and when the motor is braked, the guide wheel may also be braked. In particular, when the guide wheel rotates, the motor rotates in conjunction with the guide wheel, thereby generating a counter-electromotive force that interferes with the rotation.

When the counter-electromotive force output from the motor is electrically connected to a load (e.g., a battery, a power consumption resistor, or the like), the pipe moving device is set to the load state, and a corresponding torque (or a rotational resistance) may be generated in the motor. Accordingly, as the rotation of the motor is braked, the rotation of the guide wheel connected thereto is also braked, and thus the moving speed of the pipe moving device may be reduced.

When the counter-electromotive force output from the motor is electrically cut off from the load, the pipe moving device may be set to the no-load state. That is, the motor may function as a generator in the no-load state. Accordingly, because a substantial braking force is not generated, the guide wheel may rotate without the braking by the counter-electromotive force or the like.

For example, when the load is the battery, electric energy generated by the motor in the load state may be supplied to the battery and used for charging. Alternatively, when the load is a component such as one of various sensors provided in the pipe moving device, the electric energy may be used for operation of the corresponding component. For example, when the load is the power consumption resistor, the electrical energy may be discharged through the power consumption resistor.

However, the present invention is not limited thereto.

Operation S130 may be performed by changing an electrical connection relationship or a circuit configuration between an output of the motor and the load through switching of an electric circuit located at the output terminal of the motor.

In the embodiment, the method 100 may further include an operation of adjusting an output voltage of the motor supplied to the battery. That is, in the above operation, the output voltage may be increased or decreased so that a voltage of the counter-electromotive force generated by the motor is suitable for the battery. To this end, various inverters, various converters, and the like may be provided between the output terminal of the motor and the battery. However, the present invention is not limited thereto.

The method 100 illustrated in FIG. 1 is exemplary, and various configurations may be applied according to the embodiment of the present invention.

FIG. 2 is a flowchart of the method of operating a pipe moving device according to the embodiment of the present invention.

A method 200 may be performed when it is determined that regenerative braking is required for speed control. For example, the method 200 may be performed after operation S120 of the method 100. However, the present invention is not limited thereto.

In operation S210, a required braking force may be calculated. The required braking force may mean a degree of braking that should be applied to the pipe moving device so that the driving of the pipe moving device is within a reference range.

In operation S210, various control techniques may be applied. For example, operation S210 may be performed by proportional-integral-differential (PID) control. In this case, the required braking force may be determined by Equation 1.

[Equation 1]

$$F_{rb} = \dot{V}_e * K_p(t) + K_i \int_0^t \dot{V}_e dt + K_d \frac{d\dot{V}_e}{dt}$$

In Equation 1, $F_{rb}$ represents the required braking force, $V_e$ represents a value obtained by differentiating a difference between the speed of the pipe moving device and the reference speed, $K_p$ represents a proportional control gain, $K_i$ represents an error integral gain, $K_{ct}$ represents an error differential gain, and t represents time.

In operation S220, a braking condition may be set. Operation S220 may mean that a braking environment for generating the required braking force calculated in operation S210 is configured.

In the embodiment, the braking condition may be determined by Equation 2.

[Equation 2]

$$F_{rb} = \left(\frac{T_m \times G_m}{r_w} \times \frac{v_m}{v_{ratred}} \times N_m\right) \times D_{cycle}$$

In Equation 2, $F_{rb}$ may represent the required braking force and may be calculated by, for example, Equation 1. Further, $T_m$ represents a maximum torque of the motor, $G_m$ represents a gear ratio between the motor and the guide wheel, $r_w$ represents a radius of the guide wheel, $V_m$ represents a rotational speed of the motor, $V_{rated}$ represents a rated speed of the motor, and $N_m$ represents the number of motors used for braking. Further, $D_{cycle}$ may represent a duty cycle in which the output of the motor is supplied to the load. According to the embodiment, when there is no gear for changing a rotational ratio between the motor and the guide wheel, $G_m$ may be excluded from [Equation 2] or a value of "1" may be applied thereto.

For example, in operation S220, the braking condition may be set by changing at least one of the number of motors and the duty cycle. For example, in operation S220, the braking condition may be set by changing at least one of the number of motors, the duty cycle, the gear ratio, and the rotational speed of the motor. However, the present invention is not limited thereto.

When the braking condition is set in operation S220, the motor may generate the required braking force in operation S130 of the method 100. In this case, the acceleration generated according to the required braking force may be determined by Equation 3.

[Equation 3]

$$a = \frac{F_{pcd} - F_{bfr} - mg \; sin(\theta) - F_{rb}}{m}$$

In Equation 3, a represents the acceleration acting on the pipe moving device when the required braking force is applied, $F_{rb}$ represents the required braking force, $F_{pcd}$ represents a driving force acting on the pipe moving device by a differential pressure between of a front end and a rear end of the pipe moving device, and $F_{bfr}$ represents a frictional resistance acting on the pipe moving device. Further, m represents a mass of the pipe moving device, $\theta$ represents a posture angle of the pipe moving device, and $mgsin(\theta)$ represents a reaction force acting on the pipe moving device by the gravity.

The method 200 illustrated in FIG. 2 is exemplary, and various configurations may be applied according to the embodiment of the present invention.

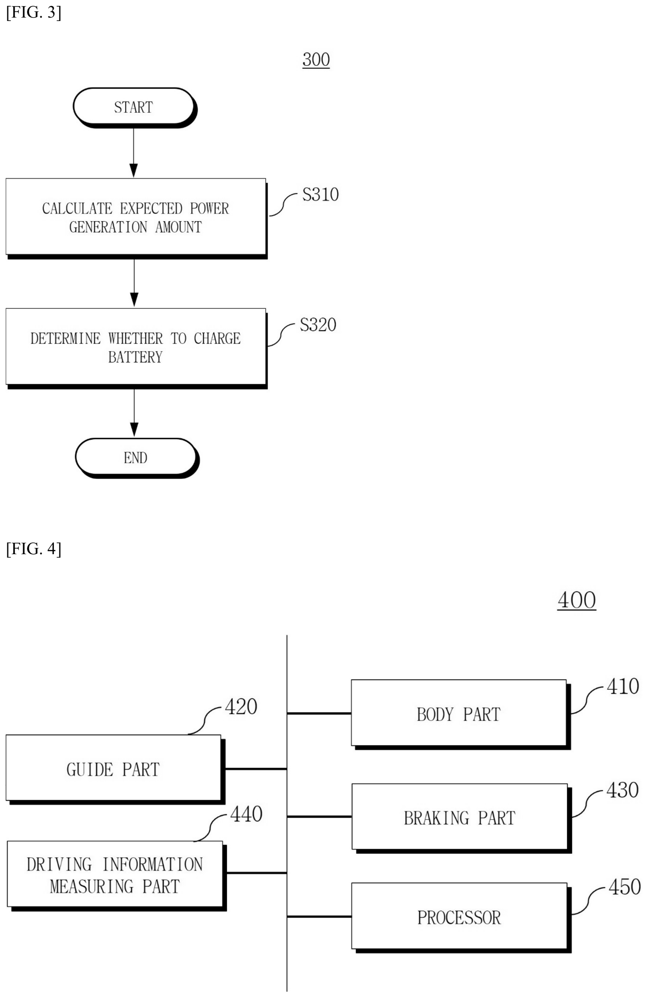

FIG. 3 is a flowchart of a method of operating a pipe moving device according to an embodiment of the present invention.

A method 300 may be performed when it is determined that regenerative braking is required for the speed control. For example, the method 300 may be performed after operation S120 of the method 100. Further, for example, the method 300 may be performed before or after operation S220 of the method 200. However, the present invention is not limited thereto.

In operation S310, an expected power generation amount may be calculated. The expected power generation amount may be a counter-electromotive force expected to be generated by the regenerative braking in the load state in which the load is connected to the motor.

In the embodiment, operation S310 may be determined by Equation 4.

[Equation 4]

$$P_R = V_m \times I_o \times E_f$$

In Equation 4, $P_R$ may represent the expected power generation amount, $V_m$ may represent the output voltage of the motor, $I_o$ may represent a final current at the output terminal of the motor, and $E_f$ represents generation efficiency of the counter-electromotive force of the motor. $E_f$ is a combination of output efficiency of the motor, charging efficiency of the battery, and the like, and, for example, may be measured through an experiment.

Further, $V_m$ may be calculated by Equation 5.

[Equation 5]

$$V_m = v_m \times K_e$$

In Equation 5, $V_m$ may represent the rotational speed of the motor, and $K_e$ may represent a speed constant (or a counter-electromotive power constant) of the motor.

In operation S320, it may be determined whether to charge the battery. In detail, in operation S320, whether to charge the battery may be determined by comparing the expected power generation amount and a charging amount of the battery in operation S310. When charging of the battery is found to be necessary or possible through the comparison, the counter-electromotive force generated in the motor may be supplied to the battery. According to the embodiment, adjustment of the output voltage of the motor may also be performed.

Alternatively, when the charging of the battery is found to be unnecessary or difficult through the comparison, the output of the motor may be connected to the power consumption resistor to discharge the battery.

The method 300 illustrated in FIG. 3 is exemplary, and various configurations may be applied according to the embodiment of the present invention.

FIG. 4 is a block diagram of a pipe moving device according to an embodiment of the present invention.

A pipe moving device 400 is implemented to drive inside the pipe and/or inspect the pipe for defects and may perform the method 100 of FIG. 1, the method 200 of FIG. 2, and the method 300 of FIG. 3 in order to control a speed when moving in the pipe. However, the present invention is not limited thereto.

Referring to FIG. 4, the pipe moving device 400 may include a body part 410, a guide part 420, a braking part 430, a driving information measuring part 440, and a processor 450.

The body part 410, which is a part forming a body of the pipe moving device 400, may be inserted into the pipe and have a movable size and shape. The body part 410 may drive inside the pipe according to a pressure difference of a fluid inside the pipe, which is generated between a front end and a rear end of the body part 410. Further, the body part 410 may accommodate various configurations (the guide part 420, the motor, the battery, and the like) thereinside or thereoutside.

In the embodiment, the body part 410 may be provided as one or a plurality of body parts 410. When the plurality of body parts 410 are provided, the body parts 410 may be connected to each other through a link member such as a universal joint. For example, a first body portion at the front end may be in charge of driving inside the pipe, and a second body portion at the rear end may be in charge of inspection of the pipe. However, the present invention is not limited thereto.

In the embodiment, a driving cup may be provided on an outer surface of the body part 410. The driving cup may be in close contact with an inner wall of the pipe and block flow of the fluid around the driving cup. Therefore, a pressure difference may be generated so that the body part 410 may drive along the inside of the pipe. For example, the driving cup may be provided as one or a plurality of driving cups. When the plurality of driving cups are provided, the driving cups may be arranged on an outer surface of the body part 410 to be spaced apart from each other in a longitudinal direction. However, the present invention is not limited thereto.

In the embodiment, at least a portion of the driving cup may be formed of an elastic material. Accordingly, when the pipe moving device 400 drives inside the pipe, even when an inner diameter of the pipe is changed or a shape of the pipe is changed, as with a curved pipe, the driving cup may be elastically deformed and come into contact with the inner wall of the pipe. For example, the driving cup may be made of a urethane material that is elastic and has sufficient durability and wear resistance to withstand damage caused by contact with the inner wall of the pipe. However, the present invention is not limited thereto, and various materials such as silicone, neoprene, polyurethane, and a thermal plastic elastomer (TPE) may be applied.

The guide part 420 may include a guide wheel that is provided in the body part 410, is in contact with the pipe, and is rotated by the movement of the pipe moving device 400 in contact with the pipe. In detail, the guide wheel may reduce friction between a body part and the pipe, prevent an impact between the body part and the pipe, and/or prevent a sudden change of a posture of the body part in the pipe.

In the embodiment, the guide wheel may rotate in conjunction with the motor. Thus, the rotation of the guide wheel may be transmitted to the motor to rotate the motor. Further, a braking force generated in the motor may be transmitted to the guide wheel to disturb the rotation of the guide wheel. When the rotation of the guide wheel is disturbed, a frictional force between the guide wheel and the pipe increases, and thus the body part may be decelerated or stopped.

In particular, the motor may always rotate in conjunction with the guide wheel. That is, when the guide wheel rotates, the rotation may always be transmitted to the motor. Further, when the braking force is generated in the motor, the corresponding braking force may be transmitted to the guide wheel. To this end, a physical connection state between the motor and the guide wheel may be continuously maintained.

In the embodiment, the guide part 420 may further include a guide support portion. One end of the guide support portion may be connected to the body part 410, the other end thereof may be connected to the guide wheel, and the guide wheel may be rotatably connected to the other end of the guide support portion. The guide support portion may be fixedly connected or rotatably connected to the body part 410.

In the embodiment, the guide part 420 may further include an elastic portion that generates an elastic force toward the guide support portion between the guide support portion and the body part 410. The guide wheel may be brought into close contact with the inner wall of the pipe by the elastic portion.

The braking part 430 may selectively generate the braking force in the guide part 420. In detail, the braking part 430 may include a motor and a switching circuit.

A rotary shaft of the motor may be connected to the guide part 420 (particularly, the guide wheel) to receive the rotation from the guide part 420. When the guide wheel rotates, the rotary shaft of the motor may rotate in conjunction with this rotation. For example, the motor may be a direct current (DC) motor. For example, the motor may be a BLDC motor. However, the present invention is not limited thereto.

In the embodiment, at least one gear connection part may be provided between the motor and the guide part 420. The gear connection parts may be connected to each other according to a predetermined gear ratio between a wheel and a power generation motor. Here, the gear ratio may be a fixed value or a changeable value. For example, the processor 450 may determine a gear ratio and allow the gear connection part to connect the motor and the wheel according to the corresponding gear ratio. A voltage, a current, a braking force, or the like of the motor may be adjusted through adjustment of the gear ratio.

The switching circuit may be located at the output terminal of the motor. The switching circuit may change the output state of the motor to one of the load state and the no-load state. This state change may be performed by electrically connecting the output of the motor to the load or electrically insulating the output of the motor from the load through switching. When the motor is in the load state, the braking force may be generated to disturb the rotation of the guide wheel. Alternatively, when the motor is in the no-load state, the braking force is not generated.

In the embodiment, the switching circuit may select a load connected to the output of the motor in the load state. For example, the switching circuit may connect the output of the motor to the battery. For example, the switching circuit may connect the output of the motor to the power consumption resistor. For example, the switching circuit may connect the output of the motor to various components (a sensor or the like). This connection may be for charging, discharging, and operating. However, the present invention is not limited thereto.

In the embodiment, the switching circuit may include various electrical elements for changing the electrical connection of the output of the motor. For example, the switching circuit may include a transistor, a diode, and the like.

In the embodiment, the switching circuit may adjust a magnitude, a period, and the like of the output voltage of the motor. To this end, the switching circuit may include at least one of an inverter that changes flow of a current generated by the motor and a converter that raises and lowers a voltage generated by the motor.

The driving information measuring part 440 is configured to acquire the driving information, and the driving information may include, for example, at least one of the moving speed, the moving acceleration, and the position information of the pipe moving device 400. In detail, the driving information measuring part 440 may include at least one of a mileage meter and an inertial measuring portion.

In the embodiment, the mileage meter may be provided on the body part 410 and may measure the moving distance of the pipe moving device 400 while in close contact with the inner wall of the pipe. The mileage meter may be a contact-type mileage meter and/or an optical mileage meter. Further, the mileage meter may be provided as one or a plurality of mileage meters. For example, the mileage meter may include three or four contact-type mileage meters. However, the present invention is not limited thereto.

In the embodiment, the mileage meter, which is a contact-type mileage meter, may include an extension portion extending outward from the body part 410 and an odometer formed at an end of the extension portion. The extension portion may be rotatably coupled to the body part 410, and the odometer may be rotatably coupled to the extension portion. The odometer may be in close contact with the inner wall of the pipe and may be rotated along the inner wall when the pipe moving device 400 moves. In this case, the odometer may include a wheel portion in close contact with the inner wall of the pipe and a rotation measuring portion for measuring a rotation amount of the wheel portion. For example, the rotation measuring portion may include a magnetic sensor that rotates together with the wheel portion and measures a rotation amount of the wheel portion. For example, the rotation measuring portion may include an incremental encoder. However, the present invention is not limited thereto, and various technologies capable of measuring the moving distance of the pipe moving device 400 may be applied to the mileage meter, especially the contact-type mileage meter.

In the embodiment, the inertial measuring portion may be provided in the body part 410 and serve to measure and record a change in inertia according to the movement of the pipe moving device 400 when the pipe moving device 400 drives along the inner wall of the pipe. For example, the inertial measuring portion unit may include an acceleration sensor that senses movement inside the pipe in three axes such as a front-rear axis, a left-right axis, and an up-down axis and a gyroscope sensor that senses three-axis rotational angular velocities of pitch, roll, and yaw. The moving speed, the acceleration, and the like of the pipe moving device 400 may be calculated from the acceleration, the rotational angular velocity, and the like that are measured by the inertial measuring portion.

The processor 450 may control overall operation of the pipe moving device 400. The processor 450 may execute one or more programs stored in a memory. The processor 450 may be a central processing unit (CPU), a graphics processing unit (GPU), or a dedicated or general-purpose processor 450 that performs methods according to the technical spirit of the present invention.

In the embodiment, the processor 450 may acquire the moving speed of the pipe moving device 400, determine whether braking of the pipe moving device 400 is required based on the speed, and set an output state according to the result of determination.

In the embodiment, when braking is required, the processor 450 may set the output state of the motor to the load state to perform regenerative braking.

In the embodiment, when braking is not required, the processor 450 may set the output state of the motor to the no-load state.

In the embodiment, when braking is required, the processor 450 may calculate the required braking force for changing the moving speed of the pipe moving device 400 to the reference speed and set the braking condition based on the required braking force.

In the embodiment, the processor 450 may calculate the required braking force through the PID control in which a differential value of the difference between the moving speed and the reference speed is input. Here, the braking condition may include at least one of the number of motors, the duty cycle, the gear ratio, and the rotational speed of the motor that are required to generate the required braking force.

In the embodiment, the processor 450 may calculate the required braking force by Equation 1.

[Equation 1]

$$F_{rb} = \dot{V}_e * K_p(t) + K_i \int_0^t \dot{V}_e dt + K_d \frac{d\dot{V}_e}{dt}$$

In Equation 1, $F_{rb}$ represents the required braking force, $V_e$ represents the value obtained by differentiating the difference between the speed of the pipe moving device and the reference speed, $K_P$ represents the proportional control gain, $K_i$ represents the error integral gain, $K_{ct}$ represents the error differential gain, and t represents time.

In the embodiment, the processor 450 may determine the braking condition by Equation 2.

[Equation 2]

$$F_{rb} = \left( \frac{T_m \times G_m}{r_w} \times \frac{v_m}{v_{rated}} \times N_m \right) \times D_{cycle}$$

In Equation 2, $F_{rb}$ may represent the required braking force and may be calculated by, for example, Equation 1. Further, $T_m$ represents to the maximum torque of the motor, $G_m$ represents the gear ratio between the motor and the guide wheel, $r_w$ represents the radius of the guide wheel, $V_m$ represents the rotational speed of the motor, $V_{rated}$ represents the rated speed of the motor, and $N_m$ represents the number of motors used for braking. Further, the $D_{cycle}$ may represent the duty cycle in which the output of the motor is supplied to the load. According to the embodiment, when there is no gear for changing the rotational ratio between the motor and the guide wheel, $G_m$ may be excluded from [Equation 2] or a value of "1" may be applied thereto.

When the braking condition is determined, the acceleration according to Equation 3 may act on the pipe moving device 400.

[Equation 3]

$$a = \frac{F_{pcd} - F_{bfr} - mg \sin(\theta) - F_{rb}}{m}$$

In Equation 3, $\alpha$ represents the acceleration acting on the pipe moving device when the required braking force is applied, $F_{rb}$ represents the required braking force, $F_{pcd}$ represents the driving force acting on the pipe moving device by a differential pressure between of a front end and a rear end of the pipe moving device, and $F_{bfr}$ represents the frictional resistance acting on the pipe moving device. Further, m represents the mass of the pipe moving device, $\theta$ represents the posture angle of the pipe moving device, and mgsin($\theta$) represents the reaction force acting on the pipe moving device by gravity.

In the embodiment, the processor 450 may calculate the expected power generation amount during the braking and determine whether to charge the battery based on the expected power generation amount and the charging amount of the battery.

In the embodiment, the processor 450 may calculate the expected power generation amount by Equation 4.

[Equation 4]

$$P_R = V_m \times I_o \times E_f$$

In Equation 4, $P_R$ may represent the expected power generation amount, $V_m$ may represent the output voltage of the motor, $I_o$ may represent the final current at the output terminal of the motor, and $E_f$ represents the generation efficiency of the counter-electromotive force of the motor. $E_f$ is a combination of the output efficiency of the motor, the charging efficiency of the battery, and the like and may be measured through an experiment.

Further, $V_m$ may be calculated by Equation 5.

[Equation 5]

$$V_m = v_m \times K_e$$

In Equation 5, $V_m$ may represent the rotational speed of the motor, and $K_e$ may represent the speed constant (or the counter-electromotive power constant) of the motor.

In the embodiment, the processor 450 may connect the output of the motor to the power consumption resistor to discharge power generated by the motor.

Although not illustrated, the device 400 may further include the battery. The battery may be connected to the switching circuit to receive the counter-electromotive force generated from the motor. Power charged in the battery may be used for driving the pipe moving device 400 and operations of various components and sensors provided in the pipe moving device 400. However, the present invention is not limited thereto.

Although not illustrated, the device 400 may further include the power consumption resistor. The power consumption resistor may be electrically connected to the motor to switch the output state of the motor to the load state. Further, the power consumption resistor may discharge the power supplied from the motor. When the braking is performed through the motor in the load state, and the charging of the battery is not necessary or not allowed, the power may be discharged through the power consumption resistor. For example, the power consumption resistor may include a cement resistor and the like.

Although not illustrated, the device 400 may further include a communication unit according to the embodiment. The communication unit may be provided for direct connection with the inside and/or the outside or for connection through a network and may be a wired and/or wireless communication unit. In detail, the communication unit may transmit data from the memory, a controller, or the like by wire or wirelessly, first receive data from the outside by wire or wirelessly, transmit the data to the controller, or store the data in memory. For example, the communication unit may include a Bluetooth communication unit, a Bluetooth low energy (BLE) communication unit, a near field magnetic communication unit, a wireless local area network (WLAN)(Wi-Fi) communication unit, a Zigbee communication unit, an Infrared Data Association (IrDA) communication unit, a Wi-Fi direct (WFD) communication unit, an ultra wideband (UWB) communication unit, and the like, but the present invention is not limited thereto. The communication unit may be implemented as at least one module or chip.

Although not illustrated in FIG. 4, the device 400 may further include the memory according to the embodiment. The memory may store a program for performing an operation of the device 400, data according to the operation, and the like. For example, the memory may include at least one type of storage medium, such as a flash memory, a hard disk, a multimedia card micro type memory, a card type memory (e.g., a SD memory, an XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc.

The device 400 illustrated in FIG. 4 is exemplary, and various configurations may be applied according to the embodiment of the present invention. For example, not all of the components illustrated in FIG. 4 are essential components for the pipe moving device 400, and according to the embodiment, the pipe moving device 400 may be implemented by more components than the components illustrated in FIG. 4, or the pipe moving device 400 may be implemented by fewer components than the components illustrated in FIG. 4.

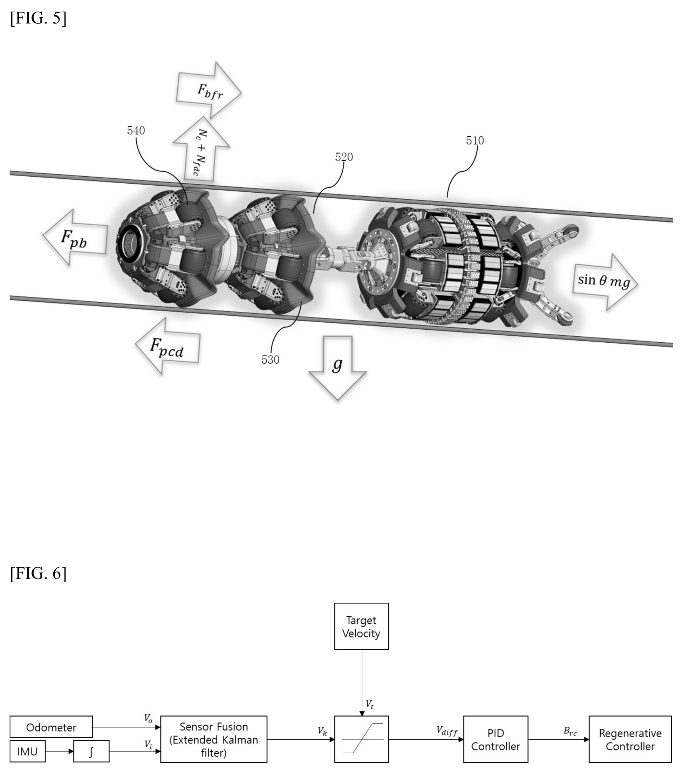

FIG. 5 is a view for describing a method of operating a pipe moving device according to an embodiment of the present invention.

Referring to FIG. 5, a force $F_{pcd}$ for moving a pipe moving device 520 by a differential pressure between a front end and a rear end thereof may be applied to the pipe moving device 520 positioned in a pipe 510. For example, $F_{pcd}$ may be calculated as $\pi*r2*\rho$, where r is a cross-sectional area of the pipe 510 and $\rho$ is a differential pressure.

Further, when the pipe moving device 520 moves along the pipe 510, friction resistance $F_{bfr}$ is generated by an inner wall of the pipe 510. $F_{bfr}$ may be calculated as $(N_c+N_{fdc})*\mu$. $N_c$ is a normal force with the inner wall of the pipe 510 by the pipe moving device 520 (especially, the driving cup 530), $N_{fdc}$ is a normal force with which the pipe moving device 520 pushes the inner wall of the pipe 510 by $F_{pcd}$, and $\mu$ is a friction coefficient between the inner wall of the pipe 510 and the pipe moving device 520.

Further, a resistance force due to the gravity may occur in the pipe moving device 520, and this resistance force may be calculated by $m*g*sin(\theta)$. Here, m is a mass of the pipe moving device 520, g is a gravitational acceleration, and $\theta$ is a pitch angle of the pipe moving device 520.

A moving force $F_{pb}$ obtained by summing the above-described forces is applied to the pipe moving device 520, and $F_{pb}$ may be calculated as $F_{pcd}-F_{bfr}-m*g*sin(\theta)=m*a_1$.

Here, when the braking according to the embodiment of the present invention is applied to the pipe moving device 520, a braking force $F_{rb}$ is generated by rotation of a guide wheel 540, and a moving force $F_{pb}$ of the pipe moving device may be changed to a force calculated by $F_{pcd}-F_{bfr}-m*g*sin(\theta)-F_{rb}=m*a_2$. That is, a magnitude of a positive acceleration is decreased or the positive acceleration is changed to a negative acceleration by the braking force $F_{rb}$, and thus the pipe moving device 520 may be decelerated.

FIG. 5 is exemplary, and various configurations may be applied according to the embodiment of the present invention.

FIG. 6 is a view for describing a method of operating a pipe moving device according to an embodiment of the present invention.

Referring to FIG. 6, the driving information measuring part of the pipe moving device may acquire the driving information, particularly the moving speed, of the pipe. In detail, the moving speed of the pipe moving device may be obtained from the plurality of odometers (mileage meters), and likewise, the moving speed of the pipe moving device may be obtained using the inertial measuring portion. The moving speed of the pipe moving device may be acquired by combining the moving speeds (e.g., through an extended Kalman filter).

In comparison between the moving speed and the reference speed, when the moving speed is smaller than the reference speed, 0 is input to the PID controller, and when the moving speed is greater than the reference speed, a differential value of a difference between the moving speed and the reference speed is input to the PID controller. When the PID controller outputs the required braking force, the motor may generate the braking force in the load state by setting the braking condition for providing the required braking force.

FIG. 6 is exemplary, and various configurations may be applied according to the embodiment of the present invention.

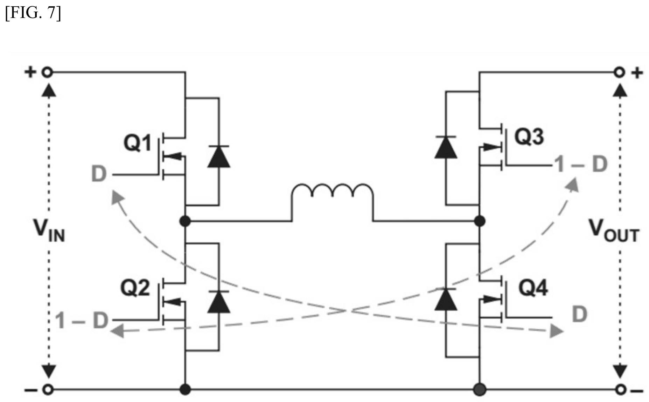

FIG. 7 is a view for describing a method of operating a pipe moving device according to an embodiment of the present invention.

Referring to FIG. 7, the switching circuit for adjusting the output state of the motor is illustrated. An input terminal of the switching circuit may be connected to the output of the motor, and an output of the switching circuit may be connected to the load. The load may be a battery. However, the present invention is not limited thereto.

In the switching circuit, main switches Q1 and Q4 may be controlled by D (duty cycle), and synchronization switches Q2 and Q3 may be controlled by 1-D (duty cycle). Further, at least one switch may be adjusted to an ON state or an OFF state regardless of the duty cycle.

For example, the no-load state in which electrical connection between Vin and Vout is cut off may be set by switching switches Q1 and Q2 to the ON state. Further, for example, through the switching, a voltage input into Vin may be charged in a reactor, and then may be transmitted to the load located at Vout.

FIG. 7 is exemplary, and various configurations may be applied according to the embodiment of the present invention.

Although embodiments have been described in detail above, the scope of rights of the present invention is not limited thereto, and various modifications and improvements by those skilled in the art using the basic concept of the present invention defined in the appended claims also belong to the scope of the present invention.

**Claims**

1. A method of operating a pipe moving device, the method comprising:

   acquiring a moving speed;
   determining whether braking is required based on the moving speed; and
   setting an output state of a motor that rotates in conjunction with a guide wheel according to a result of the determination,
   wherein the output state comprises one of a load state in which a load is electrically connected to the motor and a no-load state in which the load is electrically separated from the motor.

2. The method of claim 1, wherein, when the braking is required, the output state of the motor is set to the load state to perform regenerative braking.

3. The method of claim 1, wherein, when the braking is not required, the output state of the motor is set to the no-load state.

**4.** The method of claim 1, wherein the load comprises at least one of a battery and a power consumption resistor.

**5.** The method of claim 1, further comprising:

calculating a required braking force for changing the moving speed to a reference speed when the braking is required; and
setting a braking condition based on the required braking force.

**6.** The method of claim 5, wherein the required braking force is determined by performing proportional-integral-differential (PID) control to input a differential value of a difference between the moving speed and the reference speed.

**7.** The method of claim 5, wherein the braking condition comprises at least one of the number of motors, a duty cycle, a gear ratio, and a rotational speed of the motor, which are required to generate the required braking force.

**8.** The method of claim 5, wherein the braking condition is determined by Equation 1:

[Equation 1]

$$F_{rb} = \left( \frac{T_m \times G_m}{r_w} \times \frac{v_m}{v_{ratred}} \times N_m \right) \times D_{cycle}$$

where, in Equation 1, $F_{rb}$ represents the required braking force, $T_m$ represents a maximum torque of the motor, $G_m$ represents a gear ratio between the motor and the guide wheel, $r_w$ is a radius of the guide wheel, $V_m$ is a rotational speed of the motor, $V_{rated}$ represents a rated speed of the motor, $N_m$ represents the number of motors used for the braking, and $D_{cycle}$ represents a duty cycle of the motor.

**9.** The method of claim 4, further comprising:

calculating an expected power generation amount during the braking; and
determining whether to charge the battery based on the expected power generation amount and a charging amount of the battery.

**10.** The method of claim 4, wherein an output of the motor is connected to the power consumption resistor, and thus power generated by the motor is discharged.

**11.** A computer program stored in a recording medium to execute the method of any one of claims 1 to 10.

**12.** A device for moving a pipe, the device comprising:

a body part that drives inside a pipe due to a pressure difference of fluid between a front end and a rear end thereof;
at least one guide wheel that is provided in the body part and comes into contact with the pipe;
a motor configured to rotate in conjunction with the guide wheel;
a switching circuit configured to set an output state of the motor to one of a load state in which a load is electrically connected to the motor and a no-load state in which the load is electrically separated from the motor; and
a processor configured to acquire a moving speed, determine whether braking is required based on the moving speed, and set the output state of the motor according to a result of the determination.

**13.** The device of claim 12, further comprising at least one of a battery and a power consumption resistor selectively connected to the motor by the switching circuit.

**14.** The device of claim 12, further comprising a driving information measuring part configured to acquire driving information.

[FIG. 1]

100

```
          ( START )
              │
              ▼
┌──────────────────────────────┐
│                              │ ──── S110
│  ACQUIRE DRIVING INFORMATION │
│                              │
└──────────────────────────────┘
              │
              ▼
┌──────────────────────────────┐
│     DETERMINE WHETHER        │ ──── S120
│     BRAKING IS REQUIRED      │
│                              │
└──────────────────────────────┘
              │
              ▼
┌──────────────────────────────┐
│                              │ ──── S130
│   SET OUTPUT STATE OF MOTOR  │
│                              │
└──────────────────────────────┘
              │
              ▼
           ( END )
```

[FIG. 2]

200

```
          ( START )
              │
              ▼
┌──────────────────────────────┐
│  CALCULATE REQUIRED BRAKING  │ ──── S210
│           FORCE              │
│                              │
└──────────────────────────────┘
              │
              ▼
┌──────────────────────────────┐
│                              │ ──── S220
│    SET BRAKING CONDITION     │
│                              │
└──────────────────────────────┘
              │
              ▼
           ( END )
```

[FIG. 3]

300

```
START
  │
  ▼
┌──────────────────────────┐
│  CALCULATE EXPECTED POWER │── S310
│     GENERATION AMOUNT     │
└──────────────────────────┘
  │
  ▼
┌──────────────────────────┐
│ DETERMINE WHETHER TO CHARGE│── S320
│          BATTERY          │
└──────────────────────────┘
  │
  ▼
 END
```

[FIG. 4]

400

```
┌──────────────┐        ┌──────────────┐
│  GUIDE PART  │420     │  BODY PART   │410
└──────────────┘        └──────────────┘

                        ┌──────────────┐
                        │ BRAKING PART │430
┌──────────────────┐    └──────────────┘
│ DRIVING INFORMATION│440
│  MEASURING PART   │    ┌──────────────┐
└──────────────────┘    │  PROCESSOR   │450
                        └──────────────┘
```

13

[FIG. 5]

[FIG. 6]

[FIG. 7]

## INTERNATIONAL SEARCH REPORT

| International application No. |
|---|
| **PCT/KR2024/004762** |

| A. | CLASSIFICATION OF SUBJECT MATTER |
|---|---|

**F16L 55/32**(2006.01)i; **F16L 55/40**(2006.01)i; **B25J 5/00**(2006.01)i; **B25J 11/00**(2006.01)i; **H02P 7/06**(2006.01)i; **H02P 3/14**(2006.01)i

According to International Patent Classification (IPC) or to both national classification and IPC

| B. | FIELDS SEARCHED |
|---|---|

Minimum documentation searched (classification system followed by classification symbols)

F16L 55/32(2006.01); B25J 11/00(2006.01); B25J 5/00(2006.01); F16L 101/30(2006.01); F16L 55/18(2006.01); F16L 55/28(2006.01); G01C 22/00(2006.01); G01M 3/00(2006.01); G01N 29/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배관(pipeline), 속도(speed), 제동(brake), 모터(motor), 부하(load), 회생 제동 (regenerative braking), 스위칭 회로(switching circuit)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2012-082925 A (TOSHIBA CORP.) 26 April 2012 (2012-04-26)<br>See paragraphs [0019], [0020], [0022], [0029], [0030], [0033], [0035] and [0036], claims 1 and 3 and figures 1 and 2. | 1-4,9-11 |
| Y | | 12-14 |
| A | | 5-8 |
| Y | KR 10-2019-0005390 A (SAMSUNG HEAVY IND. CO., LTD.) 16 January 2019 (2019-01-16)<br>See paragraph [0073] and figure 2. | 12-14 |
| A | JP 2005-181139 A (JFE ENGINEERING K.K.) 07 July 2005 (2005-07-07)<br>See claim 1 and figures 1 and 2. | 1-14 |
| A | WO 2019-055546 A1 (ENTEGRA L.L.P.) 21 March 2019 (2019-03-21)<br>See claim 1 and figure 1. | 1-14 |

| [✓] Further documents are listed in the continuation of Box C. | [✓] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 January 2025** | **23 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/004762** |

## C.     DOCUMENTS CONSIDERED TO BE RELEVANT

| Category* | Citation of document, with indication, where appropriate, of the relevant passages | Relevant to claim No. |
| --- | --- | --- |
| A | KR 10-2017-0005933 A (LEE, Un Gap et al.) 17 January 2017 (2017-01-17)<br>See claim 1. | 1-14 |

Form PCT/ISA/210 (second sheet) (July 2022)

**INTERNATIONAL SEARCH REPORT**
Information on patent family members

International application No.

**PCT/KR2024/004762**

| Patent document cited in search report | | | Publication date (day/month/year) | Patent family member(s) | | | Publication date (day/month/year) |
|---|---|---|---|---|---|---|---|
| JP | 2012-082925 | A | 26 April 2012 | | None | | |
| KR | 10-2019-0005390 | A | 16 January 2019 | CN | 110520253 | A | 29 November 2019 |
| | | | | CN | 110520253 | B | 08 November 2022 |
| | | | | JP | 2020-507486 | A | 12 March 2020 |
| | | | | JP | 6863656 | B2 | 21 April 2021 |
| | | | | KR | 10-2018-0093678 | A | 22 August 2018 |
| | | | | KR | 10-2018670 | B1 | 05 September 2019 |
| | | | | SG | 11201907478 | A | 27 September 2019 |
| | | | | WO | 2018-151511 | A1 | 23 August 2018 |
| JP | 2005-181139 | A | 07 July 2005 | JP | 4228907 | B2 | 25 February 2009 |
| WO | 2019-055546 | A1 | 21 March 2019 | CA | 3075860 | A1 | 21 March 2019 |
| | | | | EP | 3682215 | A1 | 22 July 2020 |
| | | | | EP | 3682215 | B1 | 08 November 2023 |
| | | | | US | 11118718 | B2 | 14 September 2021 |
| | | | | US | 12055260 | B2 | 06 August 2024 |
| | | | | US | 2019-0078721 | A1 | 14 March 2019 |
| | | | | US | 2021-0404592 | A1 | 30 December 2021 |
| KR | 10-2017-0005933 | A | 17 January 2017 | KR | 10-1717758 | B1 | 20 March 2017 |

Form PCT/ISA/210 (patent family annex) (July 2022)